# EUROPÄISCHE PATENTSCHRIFT

(11) **EP 3 215 343 B1**
(45) Veröffentlichungstag und Bekanntmachung des Hinweises auf die Patenterteilung: **09.01.2019**
(21) Anmeldenummer: 15766516.7
(22) Anmeldetag: 22.09.2015
(51) Int. Cl.: B29C 45/16

(54) **KOINJEKTIONSDÜSE FÜR EINE SPRITZGUSSVORRICHTUNG ZUR HERSTELLUNG VON MEHRSCHICHTIGEN SPRITZGUSSERZEUGNISSEN**
CO-INJECTION NOZZLE FOR AN INJECTION MOULDING DEVICE FOR PRODUCING MULTI-LAYERED INJECTION-MOULDED PRODUCTS
BUSE DE CO-INJECTION POUR UN DISPOSITIF DE MOULAGE PAR INJECTION SERVANT À FABRIQUER DES PRODUITS MOULÉS PAR INJECTION MULTICOUCHES

(30) Priorität: 06.11.2014 CH 17152014
(43) Veröffentlichungstag der Anmeldung: 13.09.2017
(73) Patentinhaber: Fostag Formenbau AG, 8260 Stein am Rhein (CH)
(72) Erfinder: MÜHLEMANN, Rolf, CH-8255 Schlattingen (CH)
(74) Vertreter: Schneider Feldmann AG Patent- und Markenanwälte
(86) Internationale Anmeldenummer: PCT/EP2015/071668
(87) Internationale Veröffentlichungsnummer: WO 2016/071036

(56) Entgegenhaltungen:
- EP-A1- 2 781 330
- AT-B- 391 833
- JP-A- 2010 012 605
- US-A1- 2004 247 739

## Beschreibung

### Technisches Gebiet

Die Erfindung betrifft eine Koinjektionsdüse für eine Heisskanal-Koinjektionseinrichtung einer Spritzgussvorrichtung zur Herstellung von mehrschichtigen Spritzgusserzeugnissen, insbesondere Spritzgusserzeugnisse mit einer Barriere- oder Sperrschicht. Solche Koinjektionsdüsen umfassen einen ringförmigen inneren Schmelzekanal, der in der stromab gerichteten Hälfte der Koinjektionsdüse durch die zentrale Bohrung und die Ventilnadel ausgebildet und fluidisch mit einem ersten Schmelzezuführungskanal verbunden ist; einen ringförmigen mittleren Schmelzekanal, der fluidisch mit einem zweiten Schmelzezuführungskanal verbunden ist und sich um den ringförmigen inneren Schmelzkanal erstreckt; und einen ringförmigen äusseren Schmelzekanal, der fluidisch mit dem ersten Schmelzezuführungskanal verbunden ist und sich um den ringförmigen mittleren Schmelzkanal erstreckt. Der innere, mittlere und äussere Schmelzekanal sind im Bereich der Düsenspitze zur Bildung eines konzentrisch geschichteten Schmelzestrom fluidisch zusammengeführt.

### Technischer Hintergrund

Koinjektionsdüsen resp. Heisskanal-Koinjektionseinrichtungen für Spritzgussvorrichtungen, mit denen zwei unterschiedliche Schmelzen gleichzeitig durch eine Düsenmündung in einen Formhohlraum bzw. Kavität einer Spritzgussform gespritzt werden können, sind seit langem bekannt (z.B. US4657496). Die meisten älteren Koinjektionsdüsen weisen zwei separate Kanäle für die beiden Schmelzen auf, die derart angeordnet sind, dass aus der Düsenmündung eine zweischichtiger Schmelzestrom austritt.

Für die Herstellung von mehrschichtigen Spritzgusserzeugnissen, insbesondere Schutzbehälter für Lebensmittel, pharmazeutische Produkte, Blutproben, etc., mit einer sogenannten Barriere- oder Sperrschicht wird allerdings eine spezielle Art von Koinjektionsdüsen verwendet, bei welcher der Austrittsstrom dreischichtig und konzentrisch ausgebildet ist, wobei die Sperrschicht dabei die mittlere Schicht bildet.

Bereits aus WO8100231 ist eine solche Koinjektionsdüse bekannt, welche drei separate Schmelzeströme in einem dreischichtigen, konzentrischen Schmelzeaustrittsstrom kombiniert. Bei dieser Düse kann mit einer in einer zentralen Bohrung der Düse angeordneten Ventilnadel der innere Schmelzestrom reguliert werden.

Bei weiteren Koinjektionsdüsen dieses Grundprinzips wird eine erste Schmelze ausserhalb oder innerhalb der Koinjektionsdüse in zwei Ströme aufgeteilt, welche anschliessend eine innere und äussere Schicht des konzentrischen Austrittstroms bilden. Eine zweite Schmelze wird zwischen die beiden Schichten geführt und bildet die mittlere Sperrschicht. Die drei Schichten werden dabei ausserhalb oder innerhalb der Koinjektionsdüse zu einem mehrschichtigen Schmelzestrom kombiniert und als konzentrischen Austrittsstrom in den Formhohlraum gespritzt, wobei ein mehrschichtiges Spritzgusserzeugnis mit einer beidseitig abgedeckten Barriereschicht entsteht. Je nach Ausführungsart der Koinjektionsdüse oder der Koinjektionseinrichtung können die Schmelzen der unterschiedlichen Schichten reguliert werden. Um die Barriereschicht vollständig in der Schmelze für die äussere und innere Schicht einzuschliessen, wird jeweils am Anfang und am Ende eines Spritzgussvorgangs nur die Schmelze für die äussere und/oder innere Schicht ohne Schmelze für die mittlere Schicht eingespritzt.

EP0929390 zeigt eine Koinjektionsdüse, bei welcher die drei Schmelzeschichten in einer der Düse stromauf vorgeordneten Kombinationseinheit kombiniert werden und anschliessend entlang einem länglichen, rohrförmigen Durchflusskanal der Düse bis zur Düsenmündung geführt werden. Der rohrförmige Druchflusskanal wird durch eine zentrale Bohrung im Düsenkörper und einer darin angeordneten Ventilnadel gebildet. Mittels der Ventilnadel kann der Fluss der inneren Schmelzeschicht in der Kombinationseinheit beeinflusst werden. Zudem wird der Fluss der einzelnen Schmelzeströme über die Zuführungseinheit geregelt.

EP0911134 beschreibt eine Koinjektionseinheit, bei welcher drei Schmelzeströme durch jeweils eine Schmelzezuführungsöffnung in die Koinjektionsdüse geführt werden und im Bereich der Düsenspitze kurz vor der Düsenmündung zu einem konzentrisch geschichteten Schmelzestrom kombiniert werden. Die Schmelze für die innere Schicht wird in einem ringförmigen inneren Schmelzekanal, der durch eine zentrale Bohrung und eine Ventilnadel ausgebildet ist geführt. Die Schmelze für die mittlere Schicht wird in einem ringförmigen mittleren Schmelzekanal geführt, der sich um den ringförmigen inneren Schmelzkanal erstreckt. Die Schmelze für die äussere Schicht wird in einem ringförmigen äusseren Schmelzekanal geführt, der sich um den ringförmigen mittleren Schmelzkanal erstreckt. Mittels der Ventilnadel kann der innere und mittlere Schmelzekanal bei offenem äusseren Schmelzekanal geschlossen werden.

Aus WO0054955 ist eine Koinjektionsdüse bekannt, bei welcher die beiden Schmelzen für die innere und mittlere Schicht stromauf ausserhalb der Koinjektionsdüse in einer ersten Kombinationseinheit kombiniert werden und anschliessend zusammen entlang einer inneren zentralen Schmelzekanal zur Düsenmündung geführt werden, um einen möglichst stabilen kombinierten Schmelzestrom zu erhalten. Die Schmelze für die äussere Schicht wird im Bereich der Düsenspitze mit dem bereits kombinierten zentralen Schmelzestrom kombiniert und so in den Formhohlraum gespritzt.

Aus WO04103668 und US2004/247739 A1 ist eine Koinjektionseinrichtung bekannt, bei welcher ein erster Schmelzestrom innerhalb einer Koinjektionsdüse in zwei Ströme für die innere und äussere Schicht aufgeteilt wird. Die aufgeteilten Ströme werden in einer Kombinationskammer mit der zweiten Schmelze für die mittlere Schicht stromauf von einem länglichen zentralen Schmelzekanal zu einem konzentrisch geschichteten Schmelzestrom kombiniert, welcher anschliessend über den zentralen Schmelzekanal entlang einer Ventilnadel zur Düsenmündung geführt wird. Die Kombinationskammer ist derart konfiguriert, dass die Bildung der mittleren Schicht mit einer minimalen Materialmenge aus den beiden Strömen der ersten Schmelze unter Vermeidung Strömungsinstabilitäten reguliert werden kann.

EP2054209 zeigt eine Koinjektionseinrichtung, bei welcher eine erste Schmelze stromauf vor der Zuführung in die Koinjektionsdüse in zwei Ströme aufgeteilt wird. Die aufgeteilten Ströme werden anschliessend im Bereich der Düsenspitze mit der zweiten Schmelze zusammengeführt, um einen mehrschichtigen Schmelzestrom zu bilden.

WO11006999 beschreibt eine Koinjektionseinrichtung, bei welcher zwei Schmelzen seitlich einer Koinjektionsdüse zugeführt werden, wobei die erste Schmelze innerhalb der Koinjektionsdüse in je einen Strom für die innere und äussere Schicht aufgeteilt wird. Die Ströme werden in der Düsenspitze kombiniert. Die Koinjektionsdüse weist eine bewegbare Nadel und eine bewegbare Hülse zur Regulierung der einzelnen Schmelzeströme auf.

Aus WO12037682 ist eine Koinjektionsdüse bekannt, bei welcher ein Teil eines ersten Schmelzestrom über seitliche Tunnelkanäle durch einen ringförmigen zweiten Schmelzestrom geleitet wird. Die drei Schmelzeströme werden im Bereich der Spitze zu einem mehrschichtigen Schmelzestrom kombiniert. Der Zufluss des mittleren Schmelzestroms kann mit einer bewegbaren Hülse reguliert werden.

Das Material für die Barriereschicht ist teuer, weshalb es in mehrschichtigen Spritzgusserzeugnissen bevorzugt als möglichst dünne Schicht vorliegt. Auch wird am Anfang und am Schluss des jeweiligen Spritzgusszyklus lediglich die erste Schmelze eingespritzt und der Schmelzestrom der zweiten Schmelze, welche die Barriereschicht bildet, wird unterbrochen, um ein Spritzgusserzeugnis mit vollständig umkapselter Barriereschicht zu erhalten. Eine exakte Regulierung der zweiten Schmelze ist daher zur Herstellung von Spritzgusserzeugnisse mit sehr dünnen Barriereschichten wünschenswert.

Ein Problem, welches bei bekannten Koinjektionsdüsen auftreten kann, ist jedoch das Rückfliessen der zweiten Schmelze im mittleren Schmelzekanal. Findet ein solches Rückfliessen der zweiten Schmelze statt, führt dies zu einer ungenauen Zuführungen der zweiten Schmelze im nächsten Spritzgusszyklus und somit zu ungenauen oder fehlerhaften Barriereschichten der Spritzgusserzeugnissen.

Bei den Koinjektionsdüsen aus WO11006999 und WO12037682 kann ein solches Rückfliesen mittels einer bewegbaren Hülse, die den ringförmigen mittleren Schmelzekanal verschliessen kann, verhindert werden. Allerdings ist der Aufbau einer solchen Koinjektionsdüse und der Koinjektionseinrichtung aufgrund des zusätzlichen bewegbaren Teils in der Koinjektionsdüse aufwendig und teuer.

Andere Koinjektionseinrichtung, wie beispielsweise aus WO0054955 oder EP0901896 bekannt, weisen eine Rückfluss-Steuerventil auf, welches ausserhalb der Koinjektionsdüse angeordnet ist. EP0901896 betrifft allerdings eine Koinjektionsdüse mit einem nur zweischichtigen konzentrischen Schmelzeaustrittsstrom, bei welcher ein Rückfliessen nicht so gravierend ist, da sie nicht zur Herstellung von Spritzgusserzeugnissen mit Barriereschicht geeignet ist. Bei WO0054955 ist das Rückfluss-Steuerventil stromauf von der Koinjektionsdüse in einer Kombinationseinheit zwischen einer vorderen Schmelzeverteilerplatte für die erste Schmelze und einer hinteren Schmelzeverteilerplatte für die zweite Schmelze angeordnet.

Die bekannten Koinjektionsdüsen mit Rückfluss-Steuerventil - sei es über eine bewegbare Hülse oder über ein vorgeschaltetes Rückfluss-Steuerventil - weisen einen komplexen vielteiligen Aufbau auf, was sich direkt in den hohen Herstellungs- und Wartungskosten niederschlägt.

Bei allen bekannten Koinjektionsdüsen mit dreischichtig und konzentrisch ausgebildetem Austrittsstrom findet die Aufteilung der ersten Schmelze und die Kombination der Schmelzen zu einem geschichteten Strom zumindest teilweise ausserhalb der Koinjektionsdüse statt, oder sie weisen einen mehrteiligen Aufbau mit vielen komplexen Hauptbestandteilen auf. Dies ist insbesondere dann der Fall, wenn zusätzlich ein Rückfluss-Steuerventil für die zweite Schmelze vorgesehen ist.

### Darstellung der Erfindung

Eine Aufgabe der Erfindung ist es, eine einfach und kompakt aufgebaute Koinjektionsdüse zur Herstellung von mehrschichtigen Spritzgusserzeugnissen mit Barriereschicht anzugeben, bei welcher die Aufteilung und Kombination der Schmelzen innerhalb der Koinjektionsdüse stattfindet und welche kostengünstiger hergestellt und gewartet werden kann. Eine weitere Aufgabe ist es, eine Koinjektionsdüse anzugeben, bei welcher eine gleichmässige Anordnung der Schmelzekanäle möglich ist, um eine gleichmässige Wärmeverteilung innerhalb der Koinjektionsdüse zu erreichen.

Diese Aufgabe wird durch die Merkmale des Anspruch 1 gelöst. Die Koinjektionsdüse für eine Spritzgussvorrichtung zur Herstellung von mehrschichtigen Spritzgusserzeugnissen, umfasst einen ersten Schmelzezuführungskanal für eine erste Schmelze und einen zweiten Schmelzezuführungskanal für eine zweite Schmelze. Die beiden Schmelzezuführungskanäle können einfach an eine Zuführungseinrichtung für die erste respektive zweite Schmelze angeschlossen werden. Weiter umfasst die Koinjektionsdüse eine zentralen Bohrung; eine in der zentralen Bohrung axial bewegbar aufgenommene Ventilnadel zum Öffnen und Schliessen einer Düsenöffnung; einen ringförmigen inneren Schmelzekanal, der in der stromab gerichteten Hälfte der Koinjektionsdüse durch die zentrale Bohrung und die Ventilnadel ausgebildet ist und fluidisch mit dem ersten Schmelzezuführungskanal verbunden ist; einen ringförmigen mittleren Schmelzekanal, der fluidisch mit dem zweiten Schmelzezuführungskanal verbunden ist und sich um den ringförmigen inneren Schmelzkanal erstreckt; und einen ringförmigen äusseren Schmelzekanal, der fluidisch mit dem ersten Schmelzezuführungskanal verbunden ist und sich um den ringförmigen mittleren Schmelzkanal erstreckt. Der innere, mittlere und äussere Schmelzekanal sind im Bereich der Düsenspitze zur Bildung eines konzentrisch geschichteten Schmelzestrom fluidisch zusammengeführt. Die Koinjektionsdüse umfasst weiter einen Düsenkörper und einen Schmelzeverteilereinsatz, welcher die zentrale Bohrung der Koinjektionsdüse aufweist. Der Schmelzeverteilereinsatz weist einen kreiszylinderförmigen Abschnitt auf, mit dem er in einer zentralen Bohrung des Düsenkörpers aufgenommen ist. In eine Manteloberfläche des kreiszylinderförmigen Abschnitts sind mindestens ein Verteilerkanal für die erste Schmelze und mindestens ein Verteilerkanal für die zweite Schmelze eingeformt, die im Wesentlichen in axialer Richtung verlaufen.

Auf der Manteloberfläche eines solchen Schmelzeverteilereinsatz lassen sich auf einfache Weise voneinander getrennte Verteilerkanäle für beide Schmelzen einfräsen, welche dann teilweise durch die Innenwand der zentralen Bohrung im Düsenkörper abgeschlossen werden. Bohrungen quer zur axialen Richtung können die Verteilerkanäle fluidisch mit der zentralen Bohrung der Koinjektionsdüse oder den Schmelzezuführungskanäle verbinden.

Der mindestens eine Verteilerkanal für die erste Schmelze kann stromauf fluidisch mit dem ersten Schmelzezuführungskanal verbunden sein, welcher als einfache Bohrung im Düsenkörper und gegebenenfalls in einem Flansch des Schmelzeverteilereinsatzes ausgebildet sein kann. Weiter kann der mindestens eine Verteilerkanal fluidisch mit dem ringförmigen inneren Schmelzekanal verbunden sein. Stromab kann er fluidisch mit dem ringförmigen äusseren Schmelzekanal verbunden sein.

Der mindestens eine Verteilerkanal für die zweite Schmelze kann stromauf fluidisch mit dem zweiten Schmelzezuführungskanal und stromab mit dem ringförmigen mittleren Schmelzekanal verbunden ist.

Die Ausgestaltung der Koinjektionsdüse mit dem Schmelzeverteilereinsatz erlaubt, dass der mindestens eine Verteilerkanal für die zweite Schmelze stromauf über einen die zentrale Bohrung der Koinjektionsdüse passierenden Schmelzekanal mit dem zweiten Schmelzezuführungskanal verbunden sein kann, wobei der passierende Schmelzekanal und die Ventilnadel eine Rückflusssperre für die zweite Schmelze ausbilden können. So ist auf einfache Weise eine Rückflusssperre für die zweite Schmelze in die Koinjektionsdüse integriert, ohne dass weitere bewegliche Teile, wie beispielsweise bewegbare Hülsen, verwendet werden müssen.

In einer Ausführungsform weist der Schmelzeverteilereinsatz zwei Verteilerkanäle für die erste Schmelze und zwei Verteilerkanäle für die zweite Schmelze auf. Die zwei Verteilerkanäle für die erste Schmelze und die zwei Verteilerkanäle für die zweite Schmelze können abwechselnd und gleichmässig voneinander beabstandet über den Umfang des kreiszylinderförmigen Abschnitts verteilt angeordnet sein, was eine optimale Wärmeverteilung erlaubt. Die Verteilerkanäle können parallel zueinander verlaufen.

Die Verteilerkanäle können in axialer Richtung auch spiralförmig verlaufen, so dass die jeweilige Schmelze in einem gegenüber der Achse der Koinjektionsdüse geneigten Strom in den jeweiligen ringförmigen Schmelzekanal eintreten und so darin besser verteilt werden.

Der mindestens eine Verteilerkanal für die erste Schmelze kann kürzer ausgebildet sein als der mindestens eine Verteilerkanal für die zweite Schmelze.

Weiter kann die Koinjektionsdüse eine Trennhülse umfassen, deren Innenwand teilweise den ringförmigen mittleren Schmelzekanal ausbildet und der Aussenwand teilweise den ringförmigen äusseren Schmelzekanal ausbildet. Der mindestens eine Verteilerkanal für die erste Schmelze kann dabei stromab über eine Bohrung in der Trennhülse mit dem ringförmigen äusseren Schmelzekanal verbunden sein.

Die Trennhülse und die Spitze des Schmelzeverteilereinsatzes stromab können dabei konisch ausgebildet sein, wobei die Aussenwand der konischen Spitze des Schmelzeverteilereinsatzes teilweise den ringförmigen mittleren Schmelzekanal ausbildet. Weiter kann die Koinjektionsdüse eine Halte- und Dichtungshülse umfassen, welche über einen Flansch an der Trennhülse diese hält und mit der Innenfläche teilweise den ringförmigen äusseren Schmelzekanal ausbildet.

Die Koinjektionsdüse kann also eine einfache Weise aus lediglich fünf Hauptbestandteilen, nämlich eine bewegbare Ventilnadel, einen Düsenkörper, einen Schmelzeverteilereinsatz, eine Trennhülse, und eine Halte- und Dichtungshülse, aufgebaut sein, wobei die Schmelzekanäle für die Auf- und Verteilung der Schmelzen und gegebenenfalls die Rückflusssperre im Schmelzeverteilereinsatz angeordnet sind. Die übrigen Teile weisen lediglich einfache Bohrungen auf und können ansonsten als einfach Drehteile hergestellt werden.

### Kurze Erläuterung zu den Figuren

Die Erfindung soll nachfolgend anhand von Ausführungsbeispielen im Zusammenhang mit der Zeichnung näher erläutert werden. Es zeigen:
- Fig. 1: eine Schnittdarstellung einer Koinjektionseinrichtung mit einer Koinjektionsdüse in einer Gesamtansicht in einer Spritzgussform;
- Fig. 2: eine vergrösserte Detailansicht der Koinjektionsdüse aus Fig. 1;
- Fig. 3: eine Explosionsdarstellung einer Koinjektionsdüse;
- Fig. 4: eine Schnittdarstellung einer Koinjektionsdüse ohne Ventilnadel;
- Fig. 5: eine Schnittdarstellung der Rückflusssperre;
- Fig. 6: unter (a) bis (d) vier Seitenansichten von Teilen der Koinjektionsdüse in einer Explosionsdarstellung;
- Fig. 7: unter (a) und (b) jeweils eine Schnittdarstellung von Teilen der Koinjektionsdüse in einer Explosionsdarstellung; und
- Fig. 8: unter (a) bis (c) jeweils eine Schnittdarstellung der Koinjektionsdüse mit drei unterschiedliche Stellungen der Ventilnadel.

### Wege zur Ausführung der Erfindung

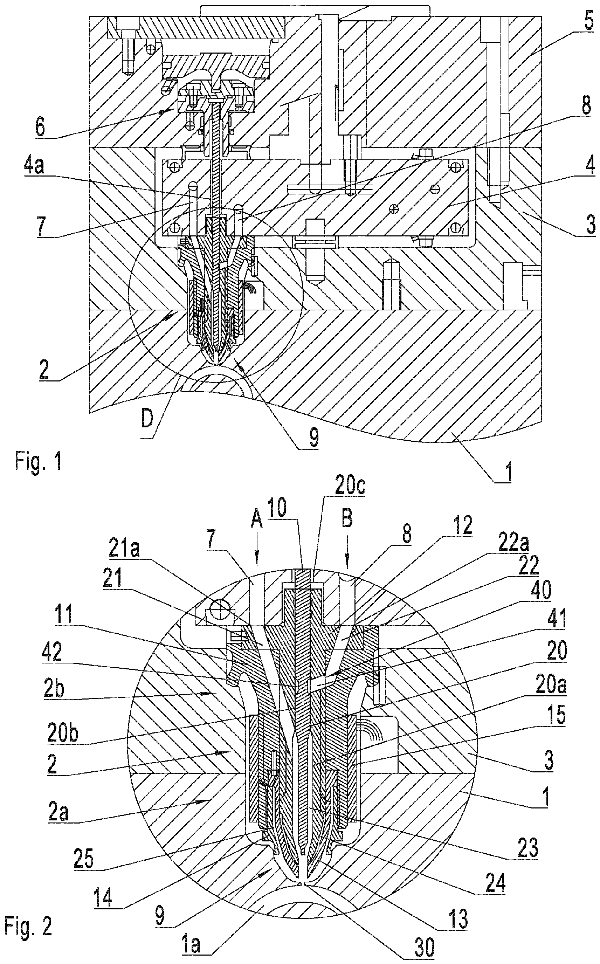

Fig. 1 zeigt eine Schnittdarstellung einer Heisskanal-Koinjektionseinrichtung zur Herstellung mehrschichtiger, eine Barriereschicht aufweisender Spritzgusserzeugnisse. Die Koinjektionseinrichtung umfasst eine Formplatte 1 mit einer Aussparung für eine Spitze 9 einer Koinjektionsdüse 2. Die Koinjektionsdüse 2 ist in einer Düsenhalteplatte 3 gehalten. An der der Spitze 9 entgegengesetzten Seite (also stromauf) weist die Koinjektionsdüse 2 eine erste Schmelzezuführungsöffnung 21a für die Zuführung einer ersten Schmelze A durch eine erste Schmelzezuführung 7 und eine zweite Schmelzezuführungsöffnung 22a für die Zuführung einer zweiten Schmelze B durch eine zweite Schmelzezuführung 8 auf. In der Düsenhalteplatte 3 ist ferner eine Schmelzeverteilerplatte 4 aufgenommen, welche mittels ersten und zweiten Schmelzezuführungen 7, 8 die Schmelzen A, B auf verschiedenen Koinjektionsdüsen 2 verteilt, wobei hier nur eine Koinjektionsdüse dargestellt ist. Darüber ist weiter eine Rückenplatte 5 zur Aufnahme der Ventilnadelbetätigungseinrichtung 6 für eine jeweilige Ventilnadel 10 der Koinjektionsdüse 2 angeordnet.

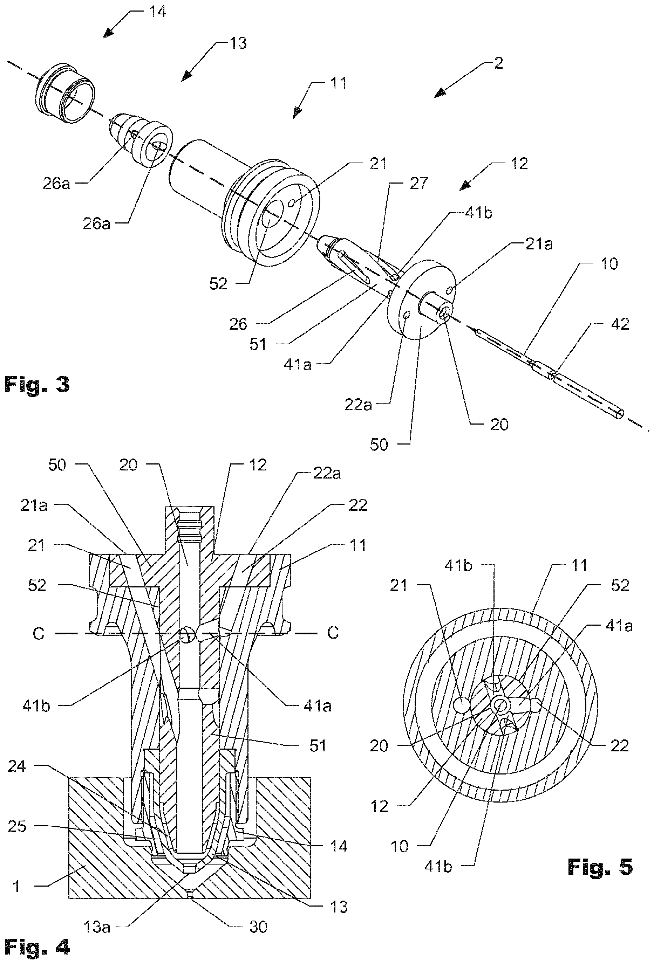

Fig. 2 zeigt eine Detailansicht der Koinjektionsdüse 2 aus Fig. 1 (Kreis D). Die Koinjektionsdüse 2 umfasst vier konzentrisch ineinander greifende Teile: einen Düsenkörper 11, einen Schmelzeverteilereinsatz 12, eine Trennhülse 13, und eine Halte- und Dichtungshülse 14. Der vierteilige Aufbau (respektive fünfteilig inkl. Ventilnadel 10) ist auch in der Explosionsdarstellung der Fig. 3 ersichtlich. Der Düsenkörper 11 kann mit einem Heizelement 15 versehen sein.

Die Koinjektionsdüse 2 weist eine zentrale Bohrung 20 auf, welche sich axial durch den Schmelzeverteilereinsatz 12 erstreckt, und in welcher die Ventilnadel 10 bewegbar aufgenommen ist. Die zentrale Bohrung 20 weist in einem unteren Abschnitt 20a (d.h. in der stromab liegenden Hälfte 2a der Koinjektionsdüse 2) einen grösseren Durchmesser auf als im oberen Bereich 20b (d.h. in der stromauf liegenden Hälfte 2b der Koinjektionsdüse 2), so dass sich entlang der Ventilnadel 10 ein ringförmiger innerer Schmelzekanal 23 ausbildet. Die Ventilnadel 10 kann ebenfalls in diesem Bereich verjüngt sein, um den Querschnitt des ringförmigen inneren Schmelzekanals 23 zu vergrössern. Auch kann nur die Ventilnadel verjüngt ausgebildet sein und die zentrale Bohrung dabei über die gesamte Länge den gleichen Durchmesser aufweisen. Der ringförmige innere Schmelzekanal 23 ist stromauf fluidisch mit einem ersten Schmelzezuführungskanal 21 für die erste Schmelze A verbunden. Stromab ist er fluidisch mit einer Düsenmündung 30 verbunden.

In der Ausführungsform der Fig. 2 weist ist der innere Schmelzekanal 23 im Bereich einer konisch zulaufenden Spitze des Schmelzeverteilereinsatzes 12 verjüngt, so dass er mittels der Ventilnadel 10 geschlossen werden kann. Um eine solche Verjüngung zu erzielen, kann der ansonsten einteilig hergestellte Schmelzerverteilereinsatz 12 eine eingeschraubte oder fest verschweisste konische Spitze aufweisen.

Die Schmelzeverteilerplatte 4 weist eine Bohrung 4a auf, durch welche sich die Ventilnadel 10 weiter bis zur Ventilnadelbetätigungseinrichtung 6 erstreckt. Der Durchmesser der Bohrung 4a der Schmelzeverteilerplatte 4, die sich stromauf von der Koinjektionsdüse 2 befindet, ist grösser als der Durchmesser der zentralen Bohrung 20 im oberen Bereich 20b, so dass die Ventilnadel 10 berührungslos durch die Schmelzeverteilerplatte 4 hindurchgeführt werden kann, um die Wärmekonduktion über die Ventilnadel 10 in die Schmelzeverteilerplatte 4 und die Rückenplatte 5 zu reduzieren.

Der erste Schmelzezuführungskanal 21 für die erste Schmelze A ist mit der ersten Schmelzezuführung 7 der Koinjektionseinrichtung verbunden. Ein zweiter Schmelzezuführungskanal 22 für die zweite Schmelze B ist mit der zweiten Schmelzezuführung 8 der Koinjektionseinrichtung verbunden.

In der gezeigten Koinjektionsdüse 2 verlaufen der erste und zweite Schmelzezufürungskanal 21, 22 geradlinig und sind durch Bohrungen im Düsenkörper 11 und im Schmelzeverteilereinsatz 12 ausgebildet.

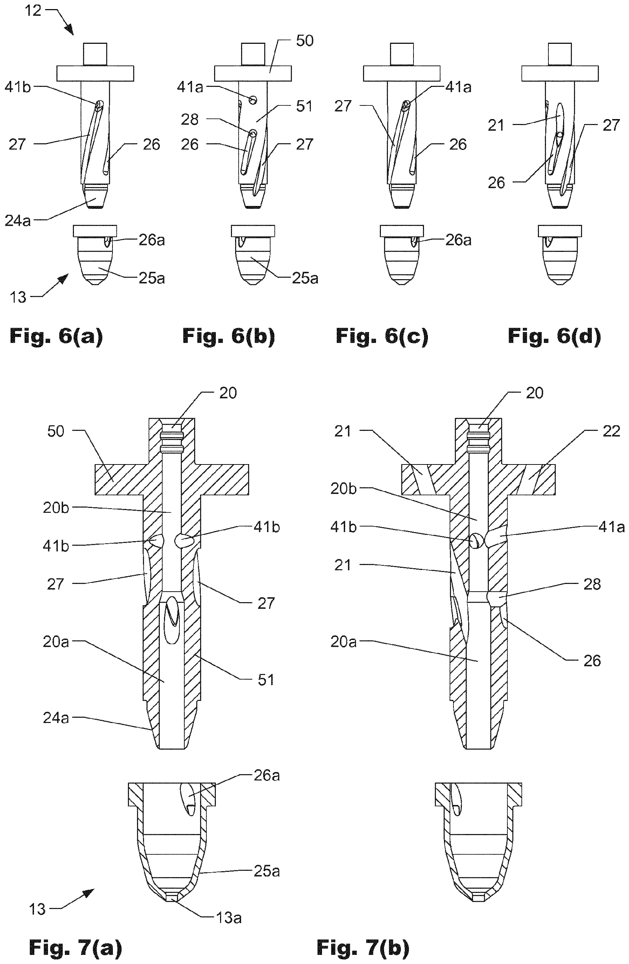

Der erste Schmelzezuführungskanal 21 für die Schmelze A führt von einer ersten Schmelzezuführungsöffnung 21a an der oberen Seite des Schmelzeverteilereinsatzes 12 zum ringförmigen inneren Schmelzekanal 24. Mindestens ein Verteilerkanal 26 (in Fig. 1 und 2 nicht erkennbar; siehe Fig. 3 und 6) für die Schmelze A ist fluidisch mit dem ersten Schmelzezuführungskanal 21 und einem ringförmigen äusseren Kanal 25 verbunden, so dass sich ein Schmelzestrom A in zwei Ströme aufteilt, welche in den ringförmigen inneren Schmelzekanal 24 respektive in den ringförmigen äusseren Schmelzekanal 25 geleitet wird. Diese beiden geteilten Schmelzeströme bilden die innere und äussere Schicht eines konzentrisch geschichteten Schmelzestrom, welcher schliesslich durch die Düsenmündung 30 in einen Formhohlraum 1a der Formplatte 1 gelangt.

Der zweite Schmelzezuführungskanal 22 für die Schmelze B führt von einer zweiten Schmelzezuführungsöffnung 22a an der oberen Seite des Schmelzeverteilereinsatzes 12 zu einem die zentrale Bohrung 20 passierenden Schmelzekanal 41, welcher zusammen mit der Ventilnadel 10 eine in die zentrale Bohrung 20 integrierte Rückflusssperre 40 für die zweite Schmelze B ausbildet. Dazu weist die bewegbare Ventilnadel 10 in der gezeigten Koinjektionsdüse 2 eine Ausnehmung 42 in Form einer umlaufenden Nut oder Einschnürung auf. Je nach Stellung der Ventilnadel 10 wird der Schmelzestrom durch den passierenden Schmelzekanal 41 blockiert. In einer Offenstellung der Rückflusssperre 40 ist die Ausnehmung 42 mit dem passierenden Schmelzekanal 41 kommunizierend ausgerichtet, so dass die Schmelze B die Ventilnadel 10 in der zentralen Bohrung 20 umfliessen kann. In einer in Längsrichtung der Ventilnadel 10 verschobenen Schliessstellung wird der passierende Schmelzekanal 41 durch die Ventilnadel 10 komplett verschlossen. Der passierende Schmelzekanal 41 ist stromab fluidisch über mindestens einen Verteilerkanal 27 (in Fig. 1 und 2 nicht erkennbar; siehe Fig. 3 und 6) mit einem ringförmigen mittleren Schmelzekanal 24 verbunden, der sich zwischen dem ringförmigen inneren Schmelzkanal 23 und dem ringförmigen äusseren Schmelzekanal 25 erstreckt.

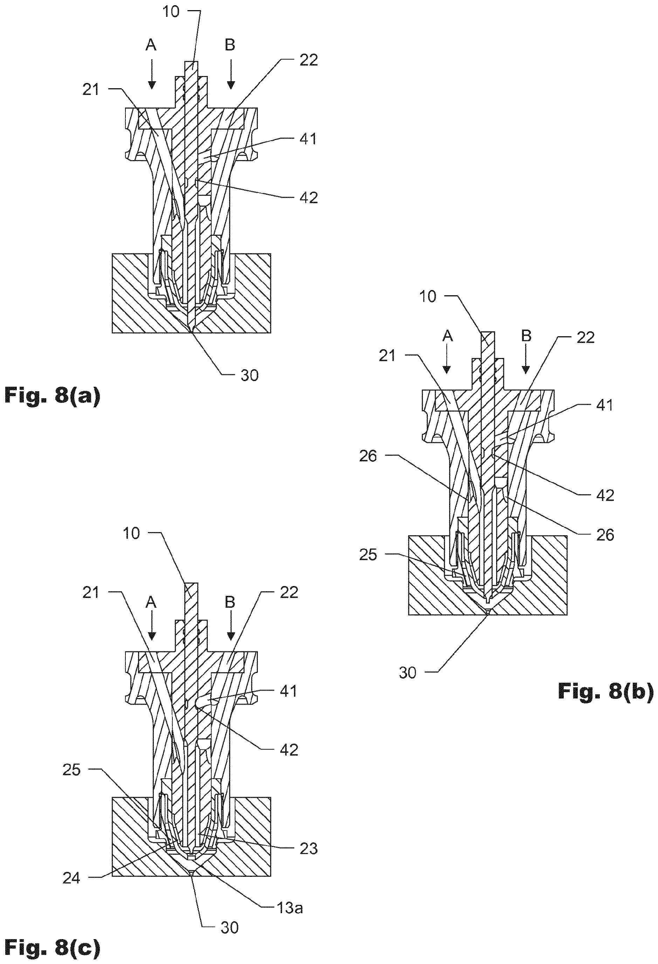

Die Ausnehmung 42 und der passierende Schmelzekanal 41 sind derart relativ zueinander angeordnet, dass die Ventilnadel 10 in einer ersten Stellung die Düsenmündung 30 und den passierenden Schmelzekanal 41 schliessst (vgl. Fig. 8(a), in einer zweiten Stellung die Düsenmündung 30 öffnet bei geschlossenem passierenden Schmelzekanal 41 (vgl. Fig. 8(b)), und in einer dritten Stellung die Düsenmündung 30 sowie den passierenden Schmelzekanal 41 öffnet (vgl. Fig. 8(c)). In der ersten Stellung kann keine der beiden Schmelzen A, B fliessen. In der zweiten Stellung fliesst lediglich die erste Schmelze A und der Fluss der zweiten Schmelze B ist blockiert. Dabei wird auch ein Rückfluss der zweiten Schmelze B durch Hineindrücken der ersten Schmelze A in den mittleren Schmelzekanal 24 effizient verhindert. In der dritten Stellung, welcher der oben erwähnten Offenstellung der Ventilnadel 10 entspricht, können die erste und die zweite Schmelze A, B zur Düsenmündung 30 hin fliessen. Die Ausnehmung 42 kann in Form einer Einschnürung, einer Querbohrung oder einer umlaufenden oder querende Nut ausgebildet sein.

Zur Ausbildung des ringförmigen mittleren Schmelzekanals 24 und des ringförmigen äusseren Schmelzekanals 25 weist die Koinjektionsdüse 2 die Trennhülse 13 auf, die in der gezeigten Koinjektionsdüse 2 stromab konisch zulaufend ausgeführt ist. Die nach innen gerichtete Oberfläche bildet einen Teil des mittleren Schmelzekanals 24, die nach aussen gerichtete Oberfläche 25a bildet einen Teil des äusseren Schmelzekanals 25. Der innere Schmelzekanal 24 wird zudem durch eine Teil der äusseren Oberfläche 24a des Schmelzeverteilereinsatzes 12 ausgebildet. Der äussere Schmelzekanal 25 wird zudem durch einen Teil einer inneren Oberfläche der Halte- und Dichtungshülse 14 ausgebildet, welche einerseits die Trennhülse 13 in der Koinjektionsdüse 2 fixiert und andererseits die Spitze 9 der Koinjektionsdüse 2 gegenüber der Aussparung in der Formplatte 1 abdichtet, so dass die Spitze 9 der Koinjektionsdüse 2 respektive die äussere Oberfläche 25a der Trennhülse 13 und ein Teil der Aussparung der Formplatte 1 eine vordere Schmelzekammer respektive einen Teil des ringförmigen äusseren Schmelzekanals 25 bilden.

Der ringförmige innere, mittlere und äussere Schmelzekanal 23, 24, 25 sind im Bereich der Düsenspitze 9 zur Bildung eines konzentrisch geschichteten Schmelzestrom zusammengeführt, welcher schliesslich durch die Düsenmündung 30 in den Formhohlraum 1a der Formplatte 1 austreten kann. Mit der bewegbaren Ventilnadel 10, welche in der gezeigten Form eine sich verjüngende Spitze aufweist, kann die Düsenmündung 30 geöffnet respektive geschlossen werden. Die Formplatte 1 zusammen mit der Düsenspitze 9 der Koinjektionsdüse 2 bilden so eine Art vordere Düsenkammer, von welcher die Schmelzen A, B durch die mit der Ventilnadel verschliessbare Düsenmündung 30 in einen Formhohlraum 1a der Formplatte 1 gelangen.

Fig. 3 zeigt eine Explosionsdarstellung der Koinjektionsdüse 2 umfassend die fünf Bestandteilen: Ventilnadel 10 (nur vorderer in der Koinjektionsdüse liegender Bereich dargestellt), Düsenkörper 11, Schmelzeverteilereinsatz 12, Trennhülse 13 und Halte- und Dichtungshülse 14. Fig. 4 zeigt eine Schnittdarstellung der Koinjektionsdüse 2 aus Fig. 3 in zusammengesetzter Form ohne Ventilnadel und mit schematisch angedeuteter Formplatte 1.

Die Ventilnadel 10 (Fig. 3) weist einen vorderen verjüngten Abschnitt (in der Hälfte 2a stromab) auf, welcher zusammen mit der zentralen Bohrung 20 im Schmelzeverteilereinsatz 12 den ringförmigen inneren Schmelzekanal 23 ausbildet. Stromauf (im Bereich der Hälfte 2b) weist die Ventilnadel 10 eine umlaufende Nut oder Einschnürung 42 auf.

Der Schmelzeverteilereinsatz 12 mit der zentralen Bohrung 20 weist stromauf einen Flansch 50 mit der ersten Schmelzezuführungsöffnung 21a und der zweiten Schmelzezuführungsöffnung 22a. Diese Öffnungen bilden den Eingang zum ersten respektive zweiten Schmelzezuführungskanal 21, 22. Ein stiftförmiger oder kreiszylinderförmiger Abschnitt 51 des Schmelzeverteilereinsatzes 12 stromab vom Flansch 50 ist in einer zentralen Bohrung 52 des Düsenkörpers 11 aufgenommen. An der Manteloberfläche des Abschnitts 51 eingeformte Nuten bilden Verteilerkanäle 26, 27 für die Schmelzen A, B, welche die Schmelzezuführungskanäle 21, 22 fluidisch mit dem ringförmigen äusseren und ringförmigen mittleren Schmelzekanälen 25, 24 verbinden. Die Verteilerkanäle 26, 27 werden dabei teilweise durch die Innenwand der zentralen Bohrung 52 im Düsenkörper 11 abgeschlossen. Im oberen Bereich des Abschnitts 51 des Schmelzeverteilereinsatzes 12 ist ein einleitender Schmelzekanal 41a und einer der beiden ausleitenden Schmelzekanäle 41b des die zentrale Bohrung 20 passierenden Schmelzekanals 41 zu erkennen. Der einleitende Schmelzekanal 41a ist fluidisch mit dem zweiten Schmelzezuführungskanal 22 verbunden. Die ausleitenden Schmelzekanäle 41b sind jeweils über einen Verteilerkanal 27 fluidisch mit dem ringförmigen mittleren Schmelzekanal 24 verbunden. In der gezeigten Ausführungsform verlaufen die Verteilerkanäle 26, 27 in axialer Richtung sprialförmig, was ein gegenüber der axialen Richtung geneigtes Eintreten der jeweiligen Schmelze in den ringförmigen äusseren respektive inneren Schmelzekanal 25, 24 erlaubt, um eine bessere Schmelzeverteilung zu erreichen (vgl. auch Fig. 6).

Fig. 5 zeigt eine Detailschnittdarstellung der integrierten Rückflusssperre 40. Der die zentrale Bohrung 20 passierende Schmelzekanal 41 wird durch einen einleitenden Schmelzekanal 41a und zwei ausleitenden Schmelzekanälen 41b ausgebildet. Diese sind durch seitlich Bohrungen im stiftförmigen oder kreiszylinderförmigen Abschnitt 51 des Schmelzeverteilereinsatzes 12 ausgebildet, welche bis in die zentrale Bohrung 20 reichen. Die Bohrung im Düsenkörper 11 für den zweiten Schmelzezuführungskanal 22 reicht bis zur Bohrung für den einleitenden Schmelzekanal 41a. In der zentralen Bohrung 20 ist die Ventilnadel 10 mit der Ausnehmung 42 axial bewegbar aufgenommen. In Fig. 5 ist die Rückflusssperre in der Offenstellung dargestellt und die Schmelze B kann die Rückflusssperre ungehindert passieren.

In Fig. 3 und Fig. 4 sind ferner die Trennhülse 13 und die Halte- und Dichtungshülse 14 ersichtlich, welche wie bereits beschrieben zusammen mit dem Schmelzeverteilereinsatz 12 den ringförmigen mittleren Schmelzekanal 24 und den ringförmigen äusseren Schmelzekanal 25 ausbilden. Eine konische Spitze des stiftförmigen Abschnitts 51 des Schmelzeverteilereinsatzes 12 ist von der konischen Trennhülse 13 beabstandet in dieser aufgenommen. Die Spitze der konischen Trennhülse 13 ist von der Halte- und Dichtungshülse 14 beabstandet in dieser aufgenommen. Die Halte- und Dichtungshülse 14 ist fest im Düsenkörper 11 verschraubt und hält so die Trennhülse 13 in der Koinjektionsdüse 2. Dazu kann die Trennhülse 13 am Ende stromauf einen Flansch aufweisen. Der Schmelzeverteilereinsatz 12 ist über seinen Flansch 50 mit dem Düsenkörper 11 verschraubt. Zur Reinigung der Koinjektionsdüse 2 kann diese einfach aus Düsenhalteplatte 3 und der Formplatte 1 entfernt und in ihre Einzelteile zerlegt werden.

Ein besonderer Vorteil des Aufbaus der Koinjektionsdüse mit dem beschriebenen Schmelzeverteilereinsatz liegt darin, dass die integrierte Rückflusssperre und die Verteilung der beiden Schmelzen innerhalb der Koinjektionsdüse auf einfach Weise durch wenige Bohrungen und eingefrästen Nuten im Schmelzeverteilereinsatz erreicht werden können.

In der in Fig. 3 und Fig. 4 gezeigten Koinjektionsdüse 2 weist die Trennhülse 13 eine Öffnung 13a auf, deren Durchmesser dem Durchmesser der verjüngten Ventilnadel 10 entspricht. Auf diese Weise kann die Ventilnadel 10 eine Stellung annehmen, in welcher die fluidische Verbindung des ringförmigen inneren und mittleren Schmelzekanals 23, 24 mit der Düsenmündung 30 unterbrochen ist. Die Öffnung 13a kann aber auch denselben Durchmesser wie der untere Abschnitt 20a der zentrale Bohrung 20 aufweisen.

Fig. 6 zeigt vier Seitenansichten Fig. 6(a) bis 6(d) (vorne, rechts, hinten, links) des Schmelzeverteilereinsatzes 12 und der Trennhülse 13 in einer Explosionsdarstellung, wobei die Ansichten jeweils um 90 Grad gedreht sind. Fig. 7(a) (rechts, vgl. Fig.6(b)) und Fig. 7(b) (vorne, vgl. Fig.6(a)) zeigen jeweils eine Schnittdarstellung des Schmelzeverteilereinsatzes 12 und der Trennhülse 13 in einer Explosionsdarstellung.

In Fig. 6 ist der spiralförmige Verlauf der Verteilerkanäle 26, 27 besonders gut ersichtlich. In der gezeigten Ausführungsform des Schmelzeverteilereinsatzes 12 sind für die erste und die zweite Schmelze A, B jeweils zwei Verteilerkanäle 26, 27 ausgebildet. Die zwei Verteilerkanäle 26 für die erste Schmelze A und die zwei Verteilerkanäle 27 für die zweite Schmelze B sind abwechselnd und gleichmässig voneinander beabstandet über den Umfang des kreiszylinderförmigen Abschnitts 51 verteilt angeordnet, was eine optimale Wärmeverteilung innerhalb der Koinjektionsdüse 2 erlaubt. In gleicher Weise könnten die Verteilerkanäle auch in axialer Richtung gerade geführt sein.

In Fig. 6(b) ist der einleitende Schmelzekanal 41a der Rückflusssperre ersichtlich. In der zentralen Bohrung 20 des Schmelzeverteilereinsatzes 12 wird die zweite Schmelze B in zwei Ströme geteilt, welche durch die ausleitenden Schmelzekanäle 41b (Fig. 6(a) und 6(c)) in die jeweiligen Verteilerkanäle 27 gelangen.

Der erste Schmelzezuführungskanal 21 reicht bis zur zentralen Bohrung 20 des Schmelzeverteilereinsatzes 12 (Fig. 7(b)). In diesem Bereich wird ein Teil der Schmelze A seitlich in zwei Verteilerkanäle 26 an der Oberfläche des Schmelzeverteilereinsatzes 12 geführt und ein Teil wird in den ringförmigen inneren Schmelzekanal 23 entlang dem unteren Abschnitt 20a der zentralen Bohrung 20 geführt. Der erster Verteilerkanal 26 wird direkt durch den ersten Schmelzezuführungskanal 21 gespiesen. Ein Verbindungskanal 28 verbindet den zweiten Verteilerkanal 26 mit der zentralen Bohrung 20 und wird so mit der ersten Schmelze A versorgt.

Die Verteilerkanäle 27 setzen stromauf von den Verteilerkanälen 26 an und reichen weiter stromab als die Verteilerkanäle 26 bis in den Bereich des ringförmigen mittleren Schmelzekanals 24, der teilweise durch die Oberfläche 4a der konischen Spitze des Schmelzeverteilereinsatzes 12 gebildet wird. Die Verteilerkanäle 26 für die erste Schmelze A sind also kürzer ausgebildet als die Verteilerkanäle 27 für die zweite Schmelze B.

Der ringförmiger äusserer Schmelzekanal 25 reicht in axialer Richtung weiter stromauf als der ringförmige mittlere Schmelzekanal 24. Auf diese Weise kann der Verteilerkanal 26 durch eine Bohrung 26a, in der Trennhülse 13 den ringförmigen äusseren Schmelzekanal 25 speisen, ohne den mittleren 24 queren zu müssen. Diese Bohrung 26a endet in der äusseren Oberfläche 25a der Trennhülse 13, welche teilweise den ringförmigen äusseren Schmelzekanal 25 ausbildet.

In allen Figuren wurden jeweils gleiche Bezugszeichen für gleich Teile verwendet.

### Bezeichnungsliste

- 1: Formplatte
- 1a: Formhohlraum (Kavität)
- 2: Koinjektionsdüse
- 2a: Hälfte der Koinjektionsdüse (stromab)
- 2b: Hälfte der Koinjektionsdüse (stromauf)
- 3: Düsenhalteplatte
- 4: Schmelzeverteilerplatte
- 4a: Bohrung
- 5: Rückenplatte
- 6: Ventilnadelbetätigungseinrichtung
- 7: erste Schmelzezuführung
- 8: zweite Schmelzezuführung
- 9: Düsenspitze
- 10: Ventilnadel
- 11: Düsenkörper
- 12: Schmelzeverteilereinsatz
- 13: Trennhülse
- 14: Halte- und Dichtungshülse
- 15: Heizelement
- 20: zentrale Bohrung
- 20a: unterer Abschnitt der zentralen Bohrung
- 20b: oberer Abschnitt der zentralen Bohrung
- 21: erster Schmelzezuführungskanal
- 21a: erste Schmelzezuführungsöffnung
- 22: zweiter Schmelzezuführungskanal
- 22a: zweite Schmelzezuführungsöffnung
- 23: ringförmiger innerer Schmelzekanal
- 24: ringförmiger mittlerer Schmelzekanal
- 25: ringförmiger äusserer Schmelzekanal
- 26: Verteilerkanal für Schmelze A
- 26a: Bohrung
- 27: Verteilerkanal für Schmelze B
- 28: Verbindungskanal
- 30: Düsenmündung
- 40: Rückflusssperre
- 41: passierender Schmelzekanal
- 41a: einleitender Schmelzekanal
- 41b: ausleitender Schmelzekanal
- 42: Ausnehmung
- 50: Flansch
- 51: stiftförmiger/kreiszylinderförmiger Abschnitt
- 52: zentrale Bohrung des Düsenkörpers
- A: erste Schmelze
- B: zweite Schmelze

## Patentansprüche

1. Koinjektionsdüse (2) für eine Spritzgussvorrichtung zur Herstellung von mehrschichtigen Spritzgusserzeugnissen, umfassend
einen ersten Schmelzezuführungskanal (21) für eine erste Schmelze (A); einen zweiten Schmelzezuführungskanal (22) für eine zweite Schmelze (B);
eine zentralen Bohrung (20);
eine in der zentralen Bohrung (20) axial bewegbar aufgenommene Ventilnadel (10) zum Öffnen und Schliessen einer Düsenmündung (30);
einen ringförmigen inneren Schmelzekanal (23), der in der stromab gerichteten Hälfte (2a) der Koinjektionsdüse (2) durch die zentrale Bohrung (20) und die Ventilnadel (10) ausgebildet ist und fluidisch mit dem ersten Schmelzezuführungskanal (21) verbunden ist;
einen ringförmigen mittleren Schmelzekanal (24), der fluidisch mit dem zweiten Schmelzezuführungskanal (22) verbunden ist und sich um den ringförmigen inneren Schmelzkanal (23) erstreckt;
einen ringförmigen äusseren Schmelzekanal (25), der fluidisch mit dem ersten Schmelzezuführungskanal (22) verbunden ist und sich um den ringförmigen mittleren Schmelzkanal (24) erstreckt;
wobei der innere, mittlere und äussere Schmelzekanal (23, 24, 25) im Bereich der Düsenspitze (9) zur Bildung eines konzentrisch geschichteten Schmelzestrom fluidisch zusammengeführt sind; wobei die Koinjektionsdüse (2) weiter einen Düsenkörper (11) und einen Schmelzeverteilereinsatz (12), welcher die zentrale Bohrung (20) der Koinjektionsdüse (2) aufweist, umfasst;
wobei der Schmelzeverteilereinsatz (12) einen kreiszylinderförmigen Abschnitt (51) aufweist, mit dem er in einer zentralen Bohrung (52) des Düsenkörpers (11) aufgenommen ist;
**dadurch gekennzeichnet, dass** in die Manteloberfläche des kreiszylinderförmigen Abschnitts (51) mindestens ein Verteilerkanal (26) für die erste Schmelze (A) und mindestens ein Verteilerkanal (27) für die zweite Schmelze (B) eingeformt sind, die im Wesentlichen in axialer Richtung verlaufen.

2. Koinjektionsdüse nach Anspruch 1, **dadurch gekennzeichnet, dass** der mindestens eine Verteilerkanal (26) für die erste Schmelze (A) stromauf fluidisch mit dem ersten Schmelzezuführungskanal (21) und dem ringförmigen inneren Schmelzekanal (23) verbunden ist, und stromab mit dem ringförmigen äusseren Schmelzekanal (25) verbunden ist.

3. Koinjektionsdüse nach einem der vorangehenden Ansprüche, **dadurch gekennzeichnet, dass** der mindestens eine Verteilerkanal (27) für die zweite Schmelze (B) stromauf fluidisch mit dem zweiten Schmelzezuführungskanal (22) verbunden ist, und stromab mit dem ringförmigen mittleren Schmelzekanal (24) verbunden ist.

4. Koinjektionsdüse nach einem der vorangehenden Ansprüche, **dadurch gekennzeichnet, dass** der mindestens eine Verteilerkanal (27) für die zweite Schmelze (B) stromauf über einen die zentrale Bohrung (20) der Koinjektionsdüse (2) passierenden Schmelzekanal (41) mit dem zweiten Schmelzezuführungskanal (21) verbunden ist, wobei der passierende Schmelzekanal (41) und die Ventilnadel (10) eine Rückflusssperre für die zweite Schmelze (B) ausbilden.

5. Koinjektionsdüse nach einem der vorangehenden Ansprüche, **dadurch gekennzeichnet, dass** der Schmelzeverteilereinsatz (12) zwei Verteilerkanäle (26) für die erste Schmelze (A) und zwei Verteilerkanäle (27) für die zweite Schmelze (B) aufweist.

6. Koinjektionsdüse nach Anspruch 5, **dadurch gekennzeichnet, dass** die zwei Verteilerkanäle (26) für die erste Schmelze (A) und die zwei Verteilerkanäle (27) für die zweite Schmelze (B) abwechselnd und gleichmässig voneinander beabstandet über den Umfang des kreiszylinderförmigen Abschnitts (51) verteilt angeordnet sind.

7. Koinjektionsdüse nach einem der vorangehenden Ansprüche, **dadurch gekennzeichnet, dass** die Verteilerkanäle (26, 27) parallel zueinander verlaufen.

8. Koinjektionsdüse nach einem der vorangehenden Ansprüche, **dadurch gekennzeichnet, dass** die Verteilerkanäle in axialer Richtung spiralförmig verlaufen.

9. Koinjektionsdüse nach einem der vorangehenden Ansprüche, **dadurch gekennzeichnet, dass** der mindestens eine Verteilerkanal (26) für die erste Schmelze (A) kürzer ausgebildet sind als der mindestens eine Verteilerkanal (27) für die zweite Schmelze (B).

10. Koinjektionsdüse nach einem der vorangehenden Ansprüche, **dadurch gekennzeichnet, dass** die Koinjektionsdüse (2) weiter eine Trennhülse (13) umfasst, deren innere Oberfläche teilweise den ringförmigen mittleren Schmelzekanal (24) ausbildet und deren äussere Oberfläche (25a) teilweise den ringförmigen äusseren Schmelzekanal (25) ausbildet.

11. Koinjektionsdüse nach Anspruch 10, **dadurch gekennzeichnet, dass** der mindestens eine Verteilerkanal (26) für die erste Schmelze (A) stromab über eine Bohrung (26a) in der Trennhülse (13) mit dem ringförmigen äusseren Schmelzekanal (25) verbunden ist.

## Claims

1. A co-injection nozzle (2) for an injection moulding device for the production of multilayer injection moulded products, comprising
a first melt supply channel (21) for a first melt (A) ;
a second melt supply channel (22) for a second melt (B) ;
a central bore (20);
an axially movable valve needle (10) accommodated in the central bore (20) to open and close a nozzle orifice (30) ;
an annular inner melt channel (23) which is formed in the downstream half (2a) of the co-injection nozzle (2) by the central bore (20) and the valve needle (10) and is in fluid communication with the first melt supply channel (21);
an annular middle melt channel (24) which is in fluid communication with the second melt supply channel (22) and which extends about the annular inner melt channel (23);
an annular outer melt channel (25) which is in fluid communication with the first melt supply channel (21) and which extends about the annular middle melt channel (24);
wherein the inner, middle and outer melt channels (23, 24, 25) converge fluidically in the region of the nozzle tip (9) in order to form a concentrically layered melt stream;
wherein the co-injection nozzle (2) further comprises a nozzle body (11) and a melt distribution insert (12) which comprises the central bore (20) of the co-injection nozzle (2);
wherein the melt distribution insert (12) has a circular cylinder-shaped section (51) with which it is accommodated in a central bore (52) of the nozzle body (11);
**characterized in that**
at least one distribution channel (26) for the first melt (A) and at least one distribution channel (27) for the second melt (B) are formed in the sleeve surface of the circular cylinder-shaped section (51) and extend in an primarily axial direction.

2. The co-injection nozzle as claimed in claim 1, **characterized in that** the at least one distribution channel (26) for the first melt (A) is in upstream fluid communication with the first melt supply channel (21) and with the annular inner melt channel (23), and in downstream fluid communication with the annular outer melt channel (25).

3. The co-injection nozzle as claimed in one of the preceding claims, **characterized in that** at least one distribution channel (27) for the second melt is in upstream fluid communication with the second melt supply channel (22) and downstream with the annular middle melt channel (24).

4. The co-injection nozzle as claimed in one of the preceding claims, **characterized in that** the at least one distribution channel (27) for the second melt (B) is connected upstream with the second melt supply channel (21) via a melt channel (41) which traverses the central bore (20) of the co-injection nozzle (2), wherein the traversing melt channel (41) and the valve needle (10) form a back-flow barrier for the second melt (B).

5. The co-injection nozzle as claimed in one of the preceding claims, **characterized in that** the melt distribution insert (12) is provided with two distribution channels (26) for the first melt (A) and two distribution channels (27) for the second melt (B).

6. The co-injection nozzle as claimed in claim 5, **characterized in that** the two distribution channels (26) for the first melt (A) and the two distribution channels (27) for the second melt (B) are distributed around the circumference of the circular cylinder-shaped section (51) in an alternating manner and separated uniformly from each other.

7. The co-injection nozzle as claimed in one of the preceding claims, **characterized in that** the distribution channels (26, 27) extend parallel to each other.

8. The co-injection nozzle as claimed in one of the preceding claims, **characterized in that** the distribution channels extend in a spiral manner in the axial direction.

9. The co-injection nozzle as claimed in one of the preceding claims, **characterized in that** the at least one distribution channel (26) for the first melt (A) is shorter than the at least one distribution channel (27) for the second melt (B).

10. The co-injection nozzle as claimed in one of the preceding claims, **characterized in that** the co-injection nozzle (2) further comprises a separating sleeve (13) the inner surface of which forms part of the annular middle melt channel (24) and the outer surface (25a) of which forms part of the annular outer melt channel (25).

11. The co-injection nozzle as claimed in claim 10, **characterized in that** the at least one distribution channel (26) for the first melt (A) is connected downstream with the annular outer melt channel (25) via a bore (26a) in the separating sleeve (13).

## Revendications

1. Tuyère de co-injection (2) destinée à un dispositif de moulage par injection pour la fabrication de produits multicouches moulés par injection, comprenant
un premier canal d'alimentation de masse fondue (21) pour une première masse fondue (A) ;
un deuxième canal d'alimentation de masse fondue (22) pour une deuxième masse fondue (B) ;
un perçage central (20) ;
un pointeau de soupape (10) réceptionné dans le perçage central (20) en étant mobile en direction axiale, destiné à ouvrir et à fermer un orifice de tuyère (30) ;
un canal interne pour masse fondue (23) de forme annulaire, qui dans la moitié (2a) dirigée en aval de la tuyère de co-injection (2) est formé par le perçage central (20) et le pointeau de soupape (10) et qui est fluidiquement relié avec le premier canal d'alimentation de masse fondue (21) ;
un canal central pour masse fondue (24) de forme annulaire, qui est fluidiquement relié avec le deuxième canal d'alimentation de masse fondue (22) et qui s'étend autour du canal interne pour masse fondue (23) de forme annulaire ;
un canal externe pour masse fondue (25) de forme annulaire, qui est fluidiquement relié avec le premier canal d'alimentation de masse fondue (22) et qui s'étend autour du canal central pour masse fondue (24) de forme annulaire ;
les canaux interne, central et externe pour masse fondue (23, 24, 25) étant fluidiquement réunis dans la zone de la pointe de tuyère (9) pour créer un flux de masse fondue stratifié de manière concentrique ;
la tuyère de co-injection (2) comprenant en outre un corps de tuyère (11) et un embout distributeur de masse fondue (12), lequel comporte le perçage central (20) de la tuyère de co-injection (2) ;
l'embout distributeur de masse fondue (12) comportant un tronçon (51) de forme cylindrique circulaire par lequel il est réceptionné dans un perçage central (52) du corps de tuyère (11) ;
**caractérisé en ce que**
dans la surface d'enveloppe du tronçon (51) de forme cylindrique circulaire sont façonnés au moins un canal distributeur (26) pour la première masse fondue (A) et au moins un canal distributeur (27) pour la deuxième masse fondue (B), qui s'écoulent sensiblement dans la direction axiale.

2. Tuyère de co-injection selon la revendication 1, **caractérisé en ce que** l'au moins un canal distributeur (26) pour la première masse fondue (A) est fluidiquement relié en amont avec le premier canal d'alimentation de masse fondue (21) et le canal interne pour masse fondue (23) de forme annulaire et en aval avec le canal externe pour masse fondue (25) de forme annulaire.

3. Tuyère de co-injection selon l'une quelconque des revendications précédentes, **caractérisé en ce que** l'au moins un canal distributeur (27) pour la deuxième masse fondue (B) est fluidiquement relié en amont avec le deuxième canal d'alimentation de masse fondue (22) et en aval avec le canal central pour masse fondue (24) de forme annulaire.

4. Tuyère de co-injection selon l'une quelconque des revendications précédentes, **caractérisé en ce que** l'au moins un canal distributeur (27) pour la deuxième masse fondue (B) est relié en amont par un canal pour masse fondue (41) passant le perçage central (20) de la tuyère de co-injection (2) avec le deuxième canal d'alimentation de masse fondue (21), le canal passant pour masse fondue (41) et le pointeau de soupape (10) formant un clapet anti-retour pour la deuxième masse fondue (B).

5. Tuyère de co-injection selon l'une quelconque des revendications précédentes, **caractérisé en ce que** l'embout distributeur de masse fondue (12) comporte deux canaux distributeurs (26) pour la première masse fondue (A) et deux canaux distributeurs (27) pour la deuxième masse fondue (B) .

6. Tuyère de co-injection selon la revendication 5, **caractérisé en ce que** les deux canaux distributeurs (26) pour la première masse fondue (A) et les deux canaux distributeurs (27) pour la deuxième masse fondue (B) sont placés en étant distribués avec un écart en alternance et régulier les uns par rapport aux autres sur la circonférence du tronçon (51) de forme cylindrique circulaire.

7. Tuyère de co-injection selon l'une quelconque des revendications précédentes, **caractérisé en ce que** les canaux distributeurs (26, 27) s'écoulent à la parallèle les uns des autres.

8. Tuyère de co-injection selon l'une quelconque des revendications précédentes, **caractérisé en ce que** dans la direction axiale, les canaux distributeurs s'écoulent en forme de spirale.

9. Tuyère de co-injection selon l'une quelconque des revendications précédentes, **caractérisé en ce que** l'au moins un canal distributeur (26) pour la première masse fondue (A) est conçu en étant plus court que l'au moins un canal distributeur (27) pour la deuxième masse fondue (B).

10. Tuyère de co-injection selon l'une quelconque des revendications précédentes, **caractérisé en ce que** la tuyère de co-injection (2) comprend par ailleurs une douille séparatrice (13) dont la surface interne forme partiellement le canal central pour masse fondue (24) de forme annulaire et dont la surface externe (25a) forme partiellement le canal externe pour masse fondue (25) de forme annulaire.

11. Tuyère de co-injection selon la revendication 10, **caractérisé en ce que** l'au moins un canal distributeur (26) pour la première masse fondue (A) est relié en aval par l'intermédiaire d'un perçage (26a) dans la douille séparatrice (13) avec le canal externe pour masse fondue (25) de forme annulaire.
